# EUROPEAN PATENT APPLICATION

(11) **EP 4 086 061 A1**
(43) Date of publication of application: **09.11.2022**
(21) Application number: 21172553.6
(22) Date of filing: 06.05.2021
(51) Int. Cl.: B29C 45/60, B29C 48/595, B29C 48/53, B29C 48/535, B29C 48/62

(54) **SCREW FOR PLASTIFYING AND CONVEYING MOLDING MATERIAL IN AN INJECTION MOLDING DEVICE**

(71) Applicant: Tyco Electronics Austria GmbH, 1190 Wien (AT)
(72) Inventor: DEIMLING, Guenther, 1210 Vienna (AT)
(74) Representative: Grünecker Patent- und Rechtsanwälte PartG mbB

(57) **Abstract**

The documents shows a screw (100) for plastifying and conveying molding material (90) in an injection molding device (200), the screw (100) comprising a shaft (5) and a thread (7) arranged on the shaft (5), the screw (100) comprising a feed zone (10) with constant thread parameters, a metering zone (30) with constant thread parameters and a compression zone (20) between the feed zone (10) and the metering zone (30), wherein an outer thread width (70) is greater in the metering zone than in the feed zone.

## Description

The invention relates to a screw for plastifying and conveying molding material in an injection molding device. Such a screw usually comprises a shaft and a thread arranged on the shaft. Typically, the screw comprises a feed zone with constant thread parameters, a metering zone with constant thread parameters and a compression zone between the feed zone and the metering zone.

Previously known screws are often not very suitable for certain delicate materials, for example liquid crystal polymers.

It is therefore the object of the invention to provide a screw that is better suited for delicate materials.

According to the invention, this is achieved when an outer thread width is greater in the metering zone than in the feed zone.

With this solution, the volume available for the material can be decreased in the metering zone. Thus, the time that the delicate material stays in the metering zone is reduced. The screw is hence better suited for delicate materials. In conventional solutions, the diameter of the shaft is increased to reduce the volume in the metering zone. However, the material is then subjected to more heat coming from the heated wall of the receptacle for the screw.

The solution according to the invention can further be improved by the following further developments and advantageous embodiments, which are independent of each other and can be combined arbitrarily, as desired.

To allow a smooth flow of the material, the outer thread width can increase in the compression zone. In particular, the outer thread width can increase continuously in the compression zone, thereby achieving a continuous flow of the material.

The outer thread width can be constant in the metering zone. This can allow a good metering operation.

In a further embodiment, the outer thread width can be constant in the feed zone to allow a constant feeding operation.

In order to achieve a smooth transition between the zones, the outer thread width at an end of the feed zone next to the compression zone can be equal to the outer thread width at an end of the compression zone next to the feed zone, and/or the outer thread width at an end of the metering zone next to the compression zone can be equal to the outer thread width at an end of the compression zone next to the metering zone. The same considerations apply for other parameters, for example the thread pitch, the thread height and the shaft diameter.

In an advantageous embodiment, a thread pitch is equal in the metering zone and in the feed zone. Preferably, the thread pitch also has the same value in the compression zone. These solutions can make the production of the screw easy.

In a further advantageous embodiment, a thread pitch is smaller in the metering zone than in the feed zone. Due to this, the volume accessible for the material in the metering zone can be reduced further.

To allow a smooth transition, the thread pitch can then decrease in the compression zone from the feed zone to the metering zone. In particular, it can decrease continuously to allow a continuous increase in the compression ratio.

According to a different advantageous embodiment, a thread pitch is greater in the metering zone than in the feed zone. By this, the reduction in the volume due to the greater outer thread width can be compensated at least partially if the compression ratio has to stay below a certain value.

In order to allow a smooth transition, the thread pitch can in this case increase continuously in the compression zone from the feed zone to the metering zone.

In an embodiment that is easy to manufacture, a shaft diameter is constant in the feed zone, the compression zone and the metering zone. The shaft can be cylindrical in the feed zone, the compression zone and the metering zone.

According to a different embodiment, the shaft diameter is greater in the metering zone than in the feed zone. Such a solution can reduce the volume in the metering zone further.

In such an embodiment, the shaft diameter can increase in the compression zone. In particular, it can increase continuously to allow smooth conveying of the material. In an easy to manufacture embodiment, the shaft can be conical in the compression zone.

An envelope of the thread in the feed zone, the compression zone and the metering zone can be a cylinder. Such a screw can be considered to have a constant outer diameter and can be used in a cylindrical receptacle. During use, the screw can move within the cylindrical receptacle, for example in order to form a shot of material of a defined weight in front of the screw. Once the defined weight is reached, the shot can be inserted into a molding cavity and the screw can move back to the original position.

An outer surface of the thread can run or be parallel to an axial direction of the screw. Through this, the screw can be guided easily at the outer surface.

According to an advantageous embodiment, the thread has rounded inner edges. This avoids the accumulation of material at the edge. Thus, the material is mixed more uniformly.

A radius of the inner edge at a front side of the thread can be smaller than a radius of the inner edge at a backside of the thread. Through this, material can be conveyed efficiently from the back to the front while a uniform fixing of the material is maintained. A ratio of the radii can in particular be in the range of 1:1.5 to 1:5.

An easy production of the screw with a low number of production steps can be possible when at least one of the flanks of the thread is rounded continuously. The curvature can run from a top to a bottom of the flank.

According to a further embodiment that facilitates the production, the radius of the edge at the front side of the thread is constant in the feed zone, the compression zone and the metering zone and/or the radius of the edge at the back side of the thread is constant in the feed zone, the compression zone and the metering zone.

For a good metering operation, the length of the metering zone can make up at least 10%, preferably 20% of the sum of the lengths of the metering zone, the compression zone and the feed zone. In order to keep the screw compact, the length of the metering zone can be less than 40% of the sum. A preferred range is 10 to 25%, with a value of 15% being particularly preferred.

The length of the compression zone can make up at least 20% of the sum of the lengths of the metering zone, the compression zone and the feed zone. In order to keep the screw compact, the length of the compression zone can be less than 50% of the sum. The longer the compression zone, the smoother is the transition in the compression of the material. A preferred range is 20 to 30%, with a value of 25% being particularly preferred.

To guarantee a good feeding operation, the length of the feed zone can make up at least 20% of the sum of the lengths of the metering zone, the compression zone and the feed zone. In order to keep the screw compact, the length of the feed zone can be less than 70% of the sum. A preferred range can here be see as 50 to 60%, with a value of 55% being particularly preferred.In the process, material is fed in the form of pellets that are then melted and further compressed. The volume that is necessary between the threads of the screw decreases from one end to the other. To take account of this, the compression ratio between the metering zone and the feed zone can be at least 1.5. A typical value would be between 2.0 and 2.2. A value of 5 can be seen as a practical upper limit. The compression ratio can be defined as the ratio of the volume that would be transported by the feed zone over the volume that would be transported by the metering zone during one rotation if an incompressible material would be used at low pressure. The compression ratio can be proportional to the ratio of the volumes or areas between two opposing flanks of the thread in the feed zone and the metering zone, respectively. In previous solutions, the compression ratio is defined as the ratio of the thread heights in the feed zone and the metering zone. However, such a definition does not appear adequate for the present solution, in which the volume in the metering zone is reduced by an increased thread width.

In the metering zone, the height of the thread can be at least 20% of the shaft diameter, to avoid that the volume for the material is too flat. Such a flat volume might result in higher transfer of heat from a heated sidewall of the receptacle into the material. Further, additional components in the material such as glass fibers could break if squeezed into a flat volume. On the other hand, in order to keep the screw stable, the height of the thread in the metering zone and advantageously also in the feed zone and the compression zone should not be more than 50% of the shaft diameter.

To avoid the formation of a high ratio of the surface area to the volume of the material, which would be disadvantageous for the above-mentioned reasons, in the metering zone the ditch, defined by the thread, can have a height-to-width ratio of at least 1:5. A ratio of 1:1 can be seen as a practical upper limit. The width can be measured at an outer edge, in particular perpendicular to a thread plane.

In the feed zone, the height of the thread is preferably at least 30% of the shaft diameter to allow the feeding of a sufficient amount of material, in particular in the form of pellets.

To allow a smooth compression and conveying, the ratio of a total length of the thread to the thickness of the screw can be at least 10, preferably at least 15. The thickness can be defined as the outer diameter or the thickness of the envelope. This ratio is often called the L/D-ratio. A value of 18 to 24 is commonly considered adequate, with a value of 20 being preferred in many applications. In order to keep the screw stable, the ratio should be 50 at most.

The screw can comprise a drive section for driving the screw. The drive section can be arranged next to the feed zone. The feed zone can be arranged between the drive section and the compression zone. The drive zone can comprise a tool interface. The tool interface can be standardized according to national or international standards or to internal standards. The tool interface can, for example, have a cross-section with a polygonal shape, for example a square shape.

In an embodiment that can be easy to produce, all thread parameters are constant in the feed zone. The thread parameters in particular comprise the thread pitch, the thread height, and the outer thread width.

Similarly, all thread parameters can be constant in the metering zone.

Advantageously, the thread is one-piece or monolithic with the shaft. This can make the production simpler and the screw stable.

The invention also relates to an injection molding device comprising an inventive screw.

Preferably, the screw is movable in a receptacle of the injection molding device along its longitudinal direction to allow the accumulation of material for an injection molding shot.

In the following, the invention will be described in greater detail and in an exemplary manner using advantageous embodiments and with reference to the drawings. The described embodiments are only possible configurations in which, however, the individual features as described above can be provided independently of one another or can be omitted.

In the figures:

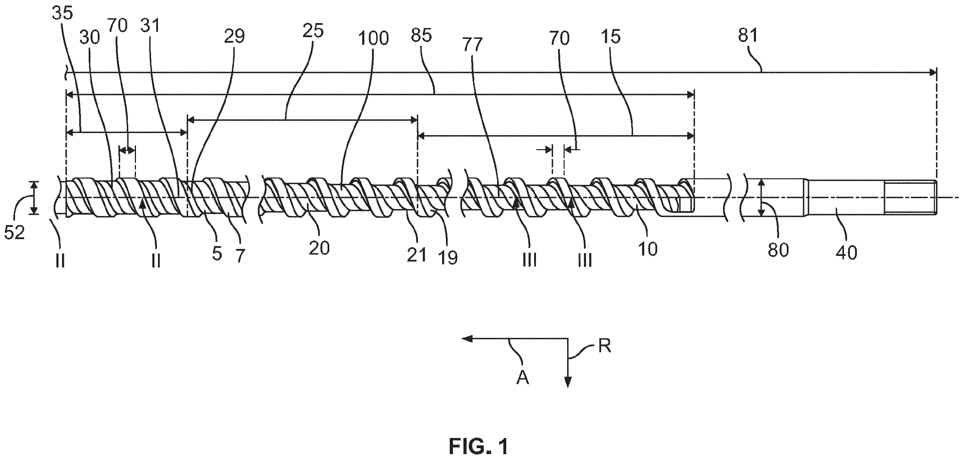

Fig.1 shows a schematic side view of an embodiment of a screw;

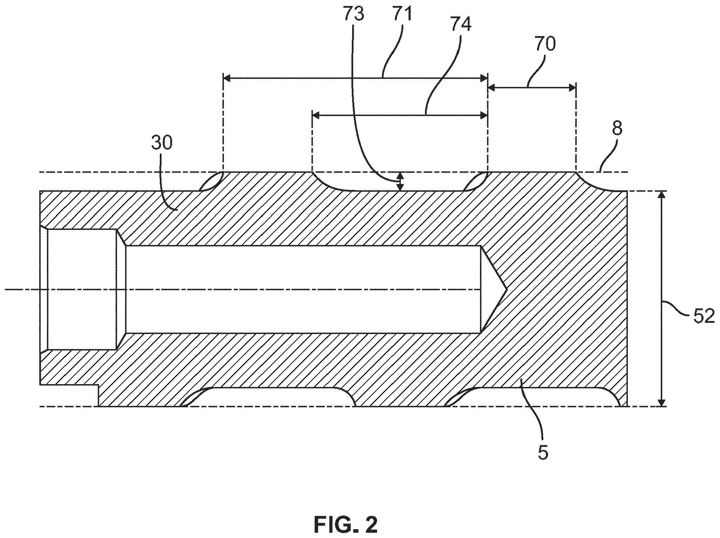

Fig. 2 shows a schematic sectional view of the metering zone of the screw along the line indicated by II-II in fig. 1;

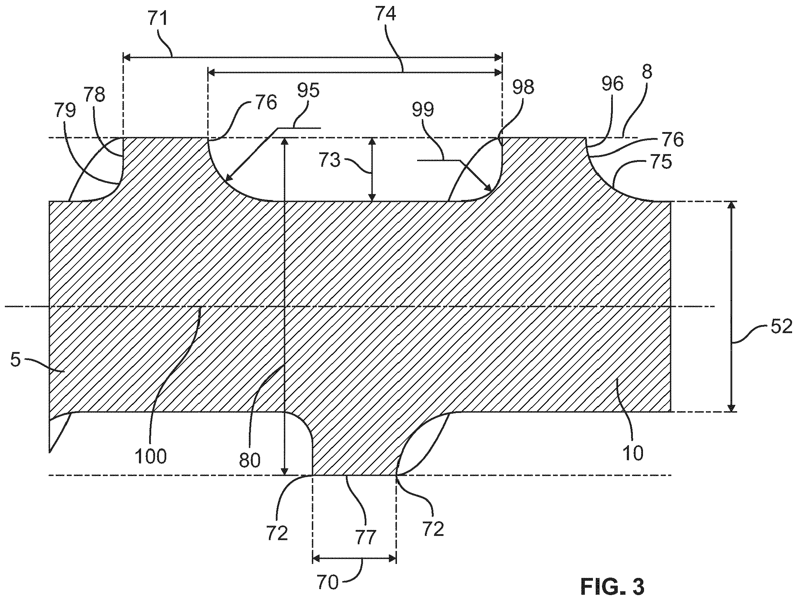

Fig. 3 shows a schematic sectional view of the feed zone of the screw along the line indicated by III-III in fig. 1;

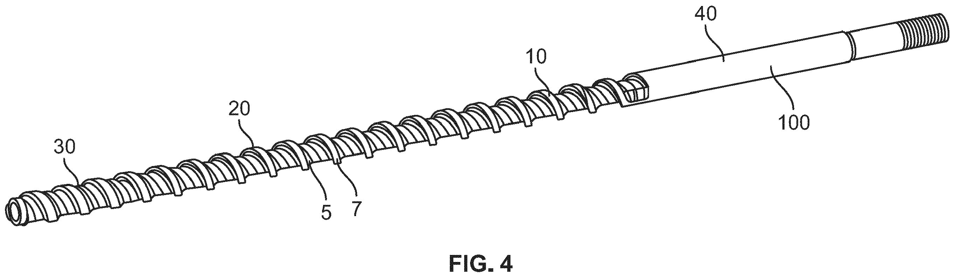

Fig. 4 shows a schematic perspective view of the screw of fig. 1;

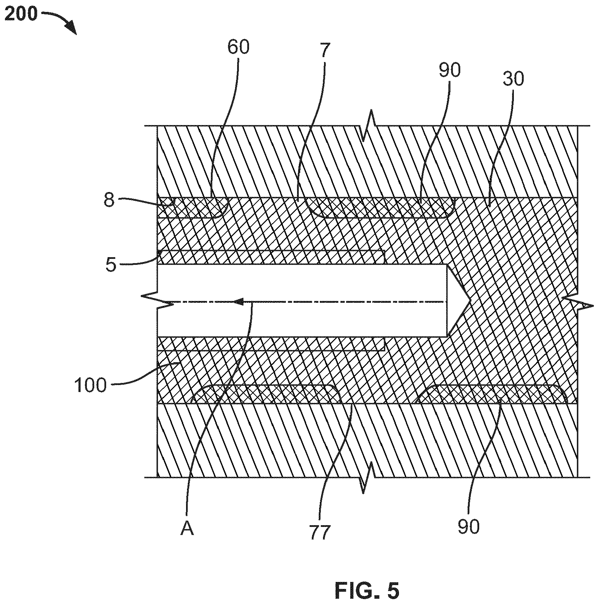

Fig. 5 shows a schematic sectional view of a part of the screw fig. 1 in an injection molding device.

The screw 100 shown in the figures can be used in an injection molding device 200. The screw 100 comprises a cylindrical shaft 5 and a helical thread 7 arranged around the shaft 5. The thread 7 is one-piece with the shaft 5 and runs at an outer side of the shaft 5. The thread 7 protrudes along a radial direction R from the shaft 5. Typically, a screw 100 is machined from a durable material, for example a steel.

At least parts of the screw 100 can be guided in a receptacle 60 of the injection molding device 200 and can be movable along an axial direction A along which the screw 100 extends.

The material 90 that is to be used for the injection molding is applied at a feed zone 10. The material 90 is, for example, in the form of pellets and can in particular be a delicate material that is, for example, sensitive to pressure peaks, shear and/or high temperatures.

A rotational driving force can be applied at a drive section 40. Through the rotation of the screw 100, the material 90 is conveyed from the feed zone 10 to a compression section 20 and then to a metering zone 30. During the conveying, the volume of the material 90 decreases due to the melting and due to the fact that air is removed. Thus, the material 90 is compressed during the conveying, in particular in the compression zone 20.

In each of the feed zone 10 and the metering zone 30, all the thread parameters, such as a thread pitch 71, an outer thread width 70 and a thread height 73, are constant. Further, the shaft diameter 52 is also constant in each of the feed zone 10 and in the metering zone 30. In the compression section 20, these parameters change. In particular, the parameters change continuously along the compression zone 20 from the feed zone 10 to the metering zone 30 to allow a smooth and constant conveying of the material 90. The shaft 5 has a conical shape in the compression zone 20 with a linearly increasing shaft diameter 52.

At an end 19 next to the compression section 20, the thread parameters in the feed section 10 are equal to the thread parameters at an end 21 next to the feed section 10 in the compression section 20. Similarly, at an end 31 next to the compression section 20, the thread parameters in the metering section 30 are equal to the thread parameters at an end 29 next to the metering section 30 in the compression section 20.

In the metering section 30, the material 90 is prepared for being injected into a cavity of the injection molding device 200. The material 90 accumulates in front of the screw 100 and pushes the screw 100 along the axial direction A in the receptacle 60. When a certain defined amount of material 90 has accumulated, it is injected into the injection molding cavity and the screw 100 moves back to its original position along the axial direction A. This procedure is repeated for each cycle of the injection molding process.

In order to reduce the time that the delicate material rests in the metering zone 30, the volume between the flanks 76, 78 of the thread 7 should be kept small. This is achieved by the fact that the outer thread width 70 is greater in the metering zone 30 than in the feed zone 10. The outer thread with 70 can be measured along the axial direction A and in the present example increases by approximately 50%.

To further reduce the volume, the shaft diameter 52 is greater in the metering zone 30 than the feed zone 10. As along the whole length of the screw 100 an outer diameter 80 of an envelope 8 is constant, the height 73 of the flanks 76, 78 is smaller in the metering section 30 than in the feed section 10. The envelope 8 of the thread 7 is cylindrical to be movable in the cylindrical receptacle 60.

The thread pitch 71 is equal in the metering zone 30, in the compression zone 20 and in the feed zone 10. The thread pitch 71 can be measured as the distance of the different sections of the thread 7 along the axial direction A, measured for example at a center of the thread 7 or at an outer edge 72. In other embodiments, however, the thread pitch 71 could be smaller or larger in the metering zone 30 than in the feed zone 10. The thread pitch 71 could then decrease or increase in the compression zone 20 from the feed zone 10 to the metering zone 20, preferably continuously.

Further, in a different embodiment the shaft diameter 52 could be constant in the feed zone 10, the compression zone 20 and the metering zone 30, i.e. along the entire thread 7. The reduction in the volume can in this case be achieved only by the increase in the outer thread width 70. The shaft 5 can then be cylindrical in the feed zone 10, the compression zone 20 and the metering zone 30. Such an embodiment is easy to manufacture.

To allow a smooth movement of the screw 100 in the receptacle 60 along the axial direction A, an outer surface 77 of the thread 7 runs parallel to the axial direction A of the screw 100.

At the interface between the thread 7 and the shaft 5, the thread 7 has rounded inner edges 75, 79. This avoids the accumulation of parts of the material 90 in sharp edges or corners. Consequently, the material 90 is blended more uniformly. In the depicted example, the curvatures are not identical at the two sides of the thread 7. Rather, a radius 99 of the inner edge 79 at the front side 98 of the thread 7 is smaller than a radius 95 of the inner edge 75 at the backside 96 of the thread 7. This allows the conveying of the material 90 with a high efficiency while maintaining a good mixing effect. The material 90 is typically conveyed from a back, where the feed section 10 is located, to a front, where the metering section 30 is located.

In order to keep the manufacturing simple, each of the radii 99, 95 is constant in the feed zone 10, the compression zone 20 and the metering zone 30, i.e. along the entire thread 7.

To further facilitate the manufacturing of the screw 100, the flank 76 of the thread 7 is rounded continuously. This avoids an additional step of creating a part with a planar surface. The curvature can thus run from top to bottom at this side of the thread 7.

In contrast, the outer edges 72 of the thread 7 can be sharp or at least have a very small radius of curvature.

To guarantee a good metering effect, the length 35 of the metering zone 30 makes up at least 10% of the sum 85 of the lengths 15, 25, 35 of the metering zone 30, the compression zone 20 and the feed zone 10, respectively.

In order to keep the screw 100 compact, the length 35 of the metering zone 30 should be less than 40% of the sum 85. A typical value would be between 10 and 25%, with a value of 15% being common. The length 15 of the feed zone 10 should be between 40 and 70% of the sum 85. In the feed zone 10, the material is heated up to nearly melting temperature, which requires an adequate length. A typical length 15 would be 50 to 60% of the sum 85, for example 55%.

The length 25 of the compression zone 20 should be at least 20% of the sum 85, as in the compression zone 20, energy is brought into the material 90 However, in order to allow a smooth transition, the length 25 can be up to 40% of the sum 85. Typically, the length 25 would be between 20 and 30%, with a value of 25% being common. The compression ratio between the metering zone 30 and the feed zone 10 should be between 1.5 and 5. Typically, the compression ratio should be between 2.0 and 2.2 for many applications. The compression ratio can be defined as the ratio of the volumes of an incompressible material that would be transported in the zones 10, 30 during a single rotation of the screw 100. However, due to the fact, that air is removed from the material 90 and the material 90 is melted during the process, the actually transported volumes of material 90 in the zones 10, 30 differ in this process. To maintain a constant flow, 100% of the material in the feed zone 10 is also transported later in the metering zone 20. The compression ratio can, for example, be proportional to the volume available between the sections of the thread 7. The height 73 of the thread 7 above the shaft 5 and the width 74 of a ditch between two sections of the thread 7 can be used for calculating the volumes. The curved design of the inner edges 75, 79 has to be taken into account when calculating the volume or area. In previous solutions, the compression ratio is defined as the ratio of the heights 73 of the thread in the feed zone 10 and the metering zone 30. However, such a definition does not appear adequate here, as the volume in the metering zone 30 is also reduced by an increased outer thread width 70.

The volume for the material 90 defined by the thread 7 should not be too flat to avoid that added components like glass fibers are damaged or that too much heat is transferred from a sidewall of the receptacle 60 onto the material 90. In particular, in the metering zone 30, the ditch defined by the thread 7 should have a ratio of the height 73 to width 74 of at least 1:5. To allow an efficient conveying, the ratio should be at most 1:1. The width 74 can be measured between two opposing outer edges 72, for example between an outer edge 72 at the flank 76 and the outer edge at the flank 78.

For a good conveying effect, in the metering zone 30 the height 73 of the thread 7 should be at least 20% of the shaft diameter 52. However, in order to keep the screw 100 stable, the height 73 should be at most 50% of the shaft diameter 52.

Similarly, in the feed zone 10 the height 73 of the thread 7 should be between 30 and 50% of the shaft diameter 52.

A ratio of the total length 85 of the thread 7 to the thickness in the form of the outer diameter 80 of the envelope 8 is at least 10. This ratio should be at most 50 to guarantee a stable operation. Commonly, this value, which is also referred to as the L/D-ratio, will be in the range of 18 to 24, with 20 being a common value suitable for many applications.

Further, a ratio of a total length 81 of the screw 100 to the thickness in the form of the outer diameter 80 of the envelope 8 is at least 10. This ratio should be at most 50 to guarantee a stable operation.

### Reference Numerals

- 5: shaft
- 7: thread
- 8: envelope
- 10: feed zone
- 15: length
- 19: end next to compression zone
- 20: compression zone
- 21: end next to feed zone
- 25: length
- 29: end next to metering zone
- 30: metering zone
- 31: end next to compression zone
- 35: length
- 40: drive section
- 52: shaft diameter
- 60: receptacle
- 70: outer thread width
- 71: thread pitch
- 72: outer edge
- 73: height
- 74: width
- 75: inner edge
- 76: flank at backside
- 77: outer surface
- 78: flank at front side
- 79: inner edge
- 80: outer diameter
- 81: total length
- 85: sum of lengths
- 90: material
- 95: radius
- 96: backside
- 98: front side
- 99: radius
- 100: screw
- 200: injection molding device

- A: axial direction
- R: radial direction

## Claims

1. Screw (100) for plastifying and conveying molding material (90) in an injection molding device (200), the screw (100) comprising a shaft (5) and a thread (7) arranged on the shaft (5), the screw (100) comprising a feed zone (10) with constant thread parameters, a metering zone (30) with constant thread parameters and a compression zone (20) between the feed zone (10) and the metering zone (30), wherein an outer thread width (70) is greater in the metering zone than in the feed zone.

2. Screw (100) according to claim 1, wherein the outer thread width (70) increases in the compression zone (20).

3. Screw (100) according to claim 1 or 2, wherein a thread pitch (71) is equal in the metering zone (30) and in the feed zone (10).

4. Screw (100) according to one of claims 1 to 3, wherein a thread pitch (71) is smaller in the metering zone (30) than in the feed zone (10).

5. Screw (100) according to claim 4, wherein the thread pitch (71) decreases in the compression zone (20) from the feed zone (10) to the metering zone (20).

6. Screw (100) according to one of claims 1 to 5, wherein a shaft diameter (52) is constant in the feed zone (10), the compression zone (20) and the metering zone (30).

7. Screw (100) according to one of claims 1 to 5, wherein the shaft diameter (52) is greater in the metering zone (30) than in the feed zone (10).

8. Screw (100) according to claim 6, wherein the shaft diameter (52) increases in the compression zone (20).

9. Screw (100) according to one of claims 1 to 8, wherein an envelope (8) of the thread (7) in the feed zone (10), the compression zone (20) and the metering zone (30) is a cylinder.

10. Screw (100) according to one of claims 1 to 9, wherein an outer surface (77) of the thread (7) runs parallel to an axial direction (A) of the screw (100).

11. Screw (100) according to one of claims 1 to 10, wherein the thread (7) has rounded inner edges (75, 79).

12. Screw (100) according to claim 11, wherein a radius (99) of the inner edge (79) at the front side (98) of the thread (7) is smaller than a radius (95) of the inner edge (75) at the backside (96) of the thread (7).

13. Screw (100) according to one of claims 1 to 12, wherein at least one of the flanks (76, 78) of the thread (7) is rounded continuously.

14. Screw (100) according to one of claims 1 to 13, wherein the compression ratio between the metering zone (30) and the feed zone (10) is at least 1.5.

15. Injection molding device (200) comprising a screw (100) according to one of claims 1 to 14.
